# EUROPEAN PATENT APPLICATION

(11) **EP 2 677 358 A1**
(43) Date of publication of application: **25.12.2013**
(21) Application number: 13184515.8
(22) Date of filing: 03.09.2009
(51) Int. Cl.: G02B 27/22, H01S 3/108, G02B 27/10, G02F 1/35, G02F 1/13357, H04N 9/31, G02F 1/39, G03B 21/20

(54) **Stereoscopic projection system**

(30) Priority: 04.09.2008 US 94202 P; 07.03.2009 US 158352 P; 04.04.2009 US 166710 P; 21.05.2009 US 180178 P; 10.07.2009 US 224615 P; 10.07.2009 US 224824 P; 10.07.2009 US 224826 P; 10.07.2009 US 224829 P; 26.07.2009 US 228611 P; 07.08.2009 US 232037 P
(62) Divisional of application: 09752017.5
(71) Applicant: Turner, Ian, Salem, NH 03079 (US); Beck, William, Salem, NH 03079 (US); Coppeta, David, Salem, NH 03079 (US); Goodwin, Dave, Salem, NH 03079 (US); Zambuto, James, Salem, NH 03079 (US)
(72) Inventor: The designation of the inventor has not yet been filed
(74) Representative: Ponder, William Anthony John

(57) **Abstract**

An optical system is provided including a first light source, a second light source; and an SLM. The first light source has a first optical output which is processed by a first part of the SLM and the second light source has a second optical output which is processed by a second part of the SLM. The first light source may have an etendue lower than 0.1 mm² sr. The first part of the SLM may be used to form an image for the left eye of the viewer and the second part of the SLM may be used to form an image for the right eye of the viewer. The first optical output may include a first wavelength band and the second optical output may include a second wavelength band and the first wavelength band may be different than the second wavelength band.

## Description

### BACKGROUND OF THE INVENTION

Movie theaters have traditionally relied on projectors which use an arc-lamp as the source of light. This is a highly inefficient source for projecting an image onto a screen due to the extended size of the source, its low brightness, its broadband light, and the relatively short lifetime of the lamp itself. The cost of ownership to theater owners is large due to the frequent lamp changes required, the cost of electricity to operate the multi kilowatt lamps as well as the cooling required to keep the projector room at a normal operating temperature.

The move to digital cinema further reduces the efficiency of the lamp due to the requirement that the light needs to be separated into component red/green/blue bands to illuminate three modulation arrays in a uniform manner before recombining the beams for projection. Finally, 3-D digital cinema requires even more light as the projected image must be alternated between scenes for the left and right eyes which reduces the apparent brightness of the image on the screen.

Red, Green, Blue solid state lasers seem to be a viable solution to these problems while reducing the total cost of ownership. The pump lasers have very long rated lives, on the order of 20,000 hours, eliminating the need for lamp replacements. Semiconductor pump lasers have high electrical to optical efficiency meaning much less heat generation for a given output power as compared to arc lamps. The lasers are narrow-band which makes them easier to separate with little light loss. They also are much brighter sources which allows high optical throughput. Finally lasers are typically polarized which provides a big power advantage for some 3-D display technologies.

Solid-state lasers are not without problems, however. The typical high purity TEM00 Gaussian spatial mode is difficult to convert to a uniform source over the digital modulators. The narrow line width of a laser leads to speckle patterns over the viewed image which may lead to an unacceptable loss of image quality.

The optical designs of most digital image projectors use spatial light modulators (SLMs) to switch each pixel on and off in order to create a visual image. The SLMs may be reflective, such as liquid crystal on silicon (LCOS) devices and digital micromirror devices (DMDs), or may be transmissive such as liquid crystal display (LCD) panels.

Some of the commonly used components of laser optical systems include optical parametric oscillators (OPOs), and laser gain modules. OPOs may be used to generate multiple wavelengths of laser light from one pump laser beam. In the OPO, parametric amplification in a nonlinear crystal converts the pump laser wavelength into two more wavelengths of light, so an optical system with one pump laser and one OPO may produce at total of three wavelengths of visible light which are useful for applications such as full-color digital image projection. Laser gain modules are used to optically amplify laser light. A laser is used to pump a gain slab which is composed of a gain medium. Optical energy is transferred from the pump beam into a main beam of light which is also traveling through the gain slab.

Many other optical components are used in laser light sources, projectors, and optical systems in general. Commonly used abbreviations are as follows: ultra-high performance (UHP) lamp, polarizing beamsplitter (PBS), dichroic beamsplitter (DBS), second harmonic generation (SHG) unit, total-internal-reflection (TIR) prism, antireflection (AR) coating, neodymium-doped yttrium lithium fluoride (Nd:YLF) laser, neodymium-doped yttrium aluminum perovskite (Nd:YAP) laser, neodymium-doped yttrium lithium fluoride (Nd:YLF) laser, lithium triborate (LBO) crystal, short wave pass (SWP) filter, long wave pass (LWP) filter, subminiature A (SMA) connector, and light emitting diode (LED). Some of the concepts used in optics and their abbreviations are full-width half maximum (FWHM) bandwidth, angle of incidence (AOI), and ultraviolet (UV) light. The organizations and industry standards that apply include the Digital Cinema Initiative (DCI), the Commission Internationale de l'Eclairage (CIE), and the International Telecommunication Union Radiocommunication (ITU-R) Recommenation 709 (Rec. 709).

Assembly and alignment of optical systems generally require that the optical components be placed in a desired position with high accuracy and that the components be held in that position throughout shipping and over the lifetime of the product. In manufacturing quantities of thousands or more, conventional optical assembly techniques do not provide cost-effective methods for assembling optical devices with high tolerances such as complex laser systems. Optical systems are typically assembled on the upper surface of a flat optical support structure. Each optical component of the optical system is aligned and attached to the flat optical support structure in its desired location.

A stereoscopic projector forms still or moving images that can be seen in three dimensions. Stereoscopic projection systems may be formed by using polarized light to form distinct images for the left eye and the right eye. These images simulate the images that would be seen in an actual three-dimensional scene. One polarization state is used for the left-eye image and the orthogonal polarization is used for the right-eye image. Glasses with polarizing filters are used to allow the left image to pass through to the left eye and the right image to pass through to the right eye, while blocking the left image from reaching the right eye, and blocking the right image from reaching the left eye. In other words, the image for the left eye is directed to the left eye and not to the right eye, whereas the image for the right eye is directed to the right eye and not to the left eye.

Instead of using polarized light, stereoscopic left and right images may be formed by using spectral selection, for example as described in US Patent No. 6,283,597, the complete disclosure of which is incorporated herein by reference. In the spectral selection method, first wavelength bands of red, green, and blue are passed to the left eye, and second wavelength bands of red, green, and blue are passed to the right eye. The first bands and second bands are distinct so that there is little or no overlap between the first and second bands.

Stereoscopic projection systems can be characterized as one of three basic types: (1) time-sequential projection that uses one SLM per color and alternately shows left eye images and right eye images in rapid sequence, (2) simultaneous projection that uses two SLMs per color, one for the left eye images and one for the right eye images, and (3) split image projection, where there is only one SLM per color, and the left and right eye images are formed simultaneously on separate parts or pixels of the single SLM.

In summary, the main problems facing digital image projectors are providing a bright image with a long operation lifetime, especially in the case of stereoscopic systems, and providing an alignment and assembly method that is feasible in full-scale production.

### SUMMARY OF THE INVENTION

The invention is defined in the appended claims, to which reference should be made

In embodiments, in one aspect, an optical system including a first light source, a second light source; and an SLM. The first light source has a first optical output which is processed by a first part of the SLM and the second light source has a second optical output which is processed by a second part of the SLM.

Implementations may include one or more of the following features. The first light source may have an etendue lower than 0.1 mm² sr. The first part of the SLM may be used to form an image for the left eye of the viewer and the second part of the SLM may be used to form an image for the right eye of the viewer. The first optical output may include a first wavelength band and the second optical output may include a second wavelength band and the first wavelength band may be different than the second wavelength band.

### BRIEF DESCRIPTION OF THE SEVERAL VIEWS OF THE DRAWING

FIG. 1 is a block diagram of an optical system which includes at least one laser light source, at least one coupler, and at least one set of SLMs;

FIG. 2 is a top view of a projector optical design with dual illumination using LCOS SLMs;

FIG. 3 is a top view of a projector optical design with dual illumination using DMD SLMs;

FIG. 4 is a top view of a projector optical design with dual illumination using transmissive LCD SLMs;

FIG. 5 is a front view of a portrait-oriented SLM with two images located one above the other;

FIG. 6 is a front view of a landscape-oriented SLM with two images located one above the other;

FIG. 7 is a front view of a portrait-oriented SLM with two images far apart and located one above the other;

FIG. 8 is a front view of a landscape-oriented SLM with two images located on the left and right of each other;

FIG. 9 is a front view of a landscape-oriented SLM with two images located one diagonal to the other;

FIG. 10 is a front view of a landscape-oriented SLM with an anamorphic pattern of pixels;

FIG. 11 is a front view of a landscape-oriented SLM with a checkerboard pattern of pixels;

FIG. 12 is a top view of low etendue illumination compared to high etendue illumination; and

FIG. 13 is a flow chart of a method of dual illumination.

### DETAILED DESCRIPTION

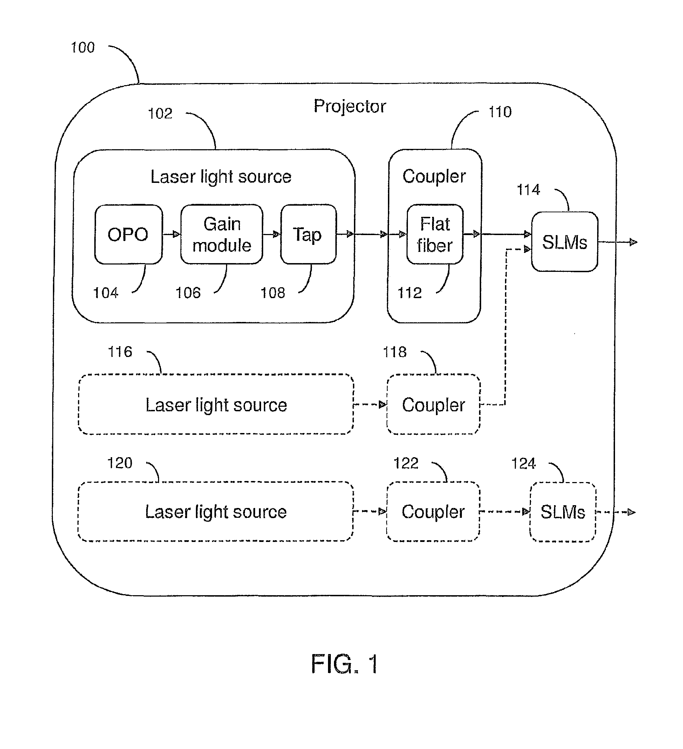

FIG. 1 is a block diagram of optical system 100 which has a number of novel parts that will be explained in the following description. First laser light source 102 may include OPO 104, laser gain module 106, and optical tap 108. Light is generated in OPO 104, passes through gain module 106, then through tap 108. The light then passes through first coupler 110 which includes flat-sided fiber 112, and then is processed by first SLMs 114. The light is then projected out of the optical system.

Second laser light source 116 may optionally be included for stereoscopic optical systems. The light from second laser light source 116 passes through second coupler 118 and then through first SLMs 114. The light is then projected out of the optical system. Alternatively, third laser light source 120 may optionally be included for stereoscopic optical systems. The light from third laser light source 120 passes through third coupler 122 and then through second SLMs 124. The light is then projected out of the optical system. Second laser light source 116 and third laser light source 120 may also include OPOs, gain modules, and optical taps (not shown).

In one aspect of the optical system shown in FIG. 1, dual illumination is used to illuminate two parts of each SLM in a projector. First laser light source 102 may be used to illuminate the first part of the SLMs and second laser light source 116 may be used to illuminate the second part of the SLMs. Dual illumination may allow reduced complexity in the optical system compared to using separate sets of SLMs. Specific embodiments are described in the following paragraphs but are not meant to be limiting in any way.

Split image projection has the advantage of using fewer SLMs and other optical components compared to simultaneous projection. Split image projection also has the advantage of not requiring active glasses such as those used in time sequential projection. Technological progress leads towards ever higher and higher pixel counts per SLM which also tends to favor using more than one image per SLM while still allowing sufficient pixels in each image to achieve high resolutions such as 1920 x 1080 pixels (full high definition) which is also known as 2K. Very high resolution 4K SLMs, (which may be 4096 x 2160 resolution) are available for cinema applications. Two 2K images may be processed on two parts of one 4K SLM. In the case of stereoscopic projection, one of the 2K images may be viewed by the left eye, and the other 2K image may be viewed by the right eye. Dual illumination allows one low-etendue light source to illuminate one part of the SLM, and a second low-etendue light source to illuminate a second part of the same SLM. Other advantages of low-etendue light sources will also be seen in the following examples.

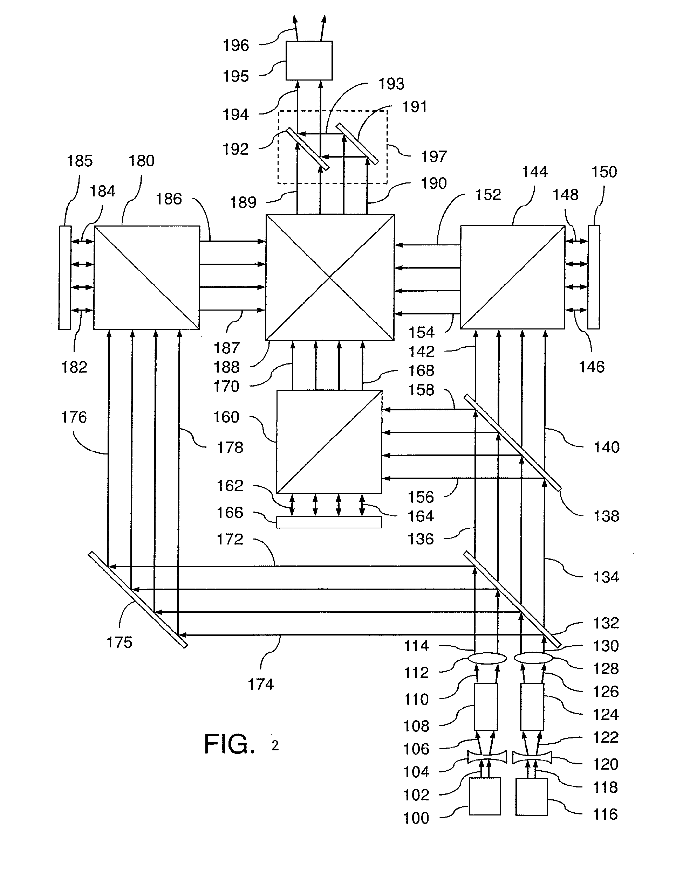

FIG. 2 shows a projector optical design with dual illumination using LCOS SLMs. First light source 2400 produces first beam segment 2402 which is spread by first lens system 2404 to make second beam segment 2406. Second beam segment 2406 is homogenized by first mixing rod 2408 to produce third beam segment 2410. Third beam segment 2410 is collimated by second lens system 2412 to form fourth beam segment 2414. Fourth beam segment 2414 partially reflects from first DBS 2432 to form fifth beam segment 2472 and partially transmits to form sixth beam segment 2436. Fifth beam segment 2472 reflects from first mirror 2475 to form seventh beam segment 2476. Seventh beam segment 2476 enters first PBS 2480 and is reflected to form eighth beam segment 2484. Eighth beam segment 2484 is processed by first SLM 2485 which rotates the polarization of each pixel depending on the desired brightness of the pixel and reflects eighth beam segment 2484 back along its input path to reenter first PBS 2480. On a pixel-by-pixel basis, if the polarization is not changed relative to the input beam, the light reflects inside first PBS 2480 to go back towards first light source 2400. If the polarization has been changed relative to the input beam, some or all of the light (depending on how much the polarization has been changed) passes through first PBS 2480 to form ninth beam segment 2486.

Sixth beam segment 2436 partially reflects from second DBS 2438 to form tenth beam segment 2458 and partially transmits to form eleventh beam segment 2442. Tenth beam segment 2458 enters second PBS 2460 and is reflected to form twelfth beam segment 2464. Twelfth beam segment 2464 is processed by second SLM 2466 which rotates the polarization of each pixel depending on the desired brightness of the pixel and reflects twelfth beam segment 2464 back along its input path to reenter second PBS 2460. On a pixel-by-pixel basis, if the polarization is not changed relative to the input beam, the light reflects inside second PBS 2460 to go back towards first light source 2400. If the polarization has been changed relative to the input beam, some or all of the light (depending on how much the polarization has been changed) passes through second PBS 2460 to form thirteenth beam segment 2468.

Eleventh beam segment 2442 enters third PBS 2444 and is reflected to form fourteenth beam segment 2446. Fourteenth beam segment 2446 is processed by third SLM 2450 which rotates the polarization of each pixel depending on the desired brightness of the pixel and reflects fourteenth beam segment 2446 back along its input path to reenter third PBS 2444. On a pixel-by-pixel basis, if the polarization is not changed relative to the input beam, the light reflects inside third PBS 2444 to go back towards first light source 2400. If the polarization has been changed relative to the input beam, some or all of the light (depending on how much the polarization has been changed) passes through third PBS 2444 to form fifteenth beam segment 2454.

First beam combiner 2488 combines ninth beam segment 2486, thirteenth beam segment 2468, and fifteenth beam segment 2454 to form sixteenth beam segment 2490. Sixteenth beam segment 2490 reflects from second mirror 2491 to form seventeenth beam segment 2493. Seventeenth beam segment 2493 reflects from third DBS 2492 to form beam segment 2494.

Second light source 2416 produces eighteenth beam segment 2418 which is spread by third lens system 2420 to make nineteenth beam segment 2422. Nineteenth beam segment 2422 is homogenized by second mixing rod 2424 to produce twentieth beam segment 2426. Twentieth beam segment 2426 is collimated by fourth lens system 2428 to form twenty-first beam segment 2430. Twenty-first beam segment 2430 partially reflects from first DBS 2432 to form twenty-second beam segment 2474 and partially transmits to form twenty-third beam segment 2434. Twenty-second beam segment 2474 reflects from first mirror 2475 to form twenty-fourth beam segment 2478. Twenty-fourth beam segment 2478 enters first PBS 2480 and is reflected to form twenty-fifth beam segment 2482. Twenty-fifth beam segment 2482 is processed by first SLM 2485, which rotates the polarization of each pixel depending on the desired brightness of the pixel and reflects twenty-fifth beam segment 2482 back along its input path to reenter first PBS 2480. On a pixel-by-pixel basis, if the polarization is not changed relative to the input beam, the light reflects inside first PBS 2480 to go back towards first light source 2400. If the polarization has been changed relative to the input beam, some or all of the light (depending on how much the polarization has been changed) passes through first PBS 2480 to form twenty-sixth beam segment 2487.

Twenty-third beam segment 2434 partially reflects from second DBS 2438 to form twenty-seventh beam segment 2456 and partially transmits to form twenty-eighth beam segment 2440. Twenty-seventh segment 2456 enters second PBS 2460 and is reflected to form twenty-ninth beam segment 2462. Twenty-ninth beam segment 2462 is processed by second SLM 2466, which rotates the polarization of each pixel depending on the desired brightness of the pixel and reflects twenty-ninth beam segment 2462 back along its input path to reenter second PBS 2460. On a pixel-by-pixel basis, if the polarization is not changed relative to the input beam, the light reflects inside second PBS 2460 to go back towards first light source 2400. If the polarization has been changed relative to the input beam, some or all of the light (depending on how much the polarization has been changed) passes through second PBS 2460 to form thirtieth beam segment 2470.

Twenty-eighth beam segment 2440 enters third PBS 2444 and is reflected to form thirty-first beam segment 2448. Thirty-first beam segment 2448 is processed by third SLM 2450, which rotates the polarization of each pixel depending on the desired brightness of the pixel and reflects thirty-first beam segment 2448 back along its input path to reenter third PBS 2444. On a pixel-by-pixel basis, if the polarization is not changed relative to the input beam, the light reflects inside third PBS 2444 to go back towards first light source 2400. If the polarization has been changed relative to the input beam, some or all of the light (depending on how much the polarization has been changed) passes through third PBS 2444 to form thirty-second beam segment 2452.

First beam combiner 2488 combines twenty-sixth beam segment 2487, thirtieth beam segment 2470, and thirty-second beam segment 2452 to form thirty-third beam segment 2489. Thirty-third beam segment 2489 passes through third DBS 2492 to combine with seventeenth beam segment 2493 in forming thirty-fourth beam segment 2494. Thirty-fourth beam segment 2494 passes through fifth lens system 2495 to form thirty-fifth beam segment 2496 which passes outside of the projector to make a viewable image on a projection screen (not shown).

First beam combiner 2488 may be an X-prism. Second mirror 2491 and third DBS 2492 form second beam combiner 2497. First lens system 2404, second lens system 2412, third lens system 2420, fourth lens system 2428, and fifth lens system 2495 may be formed from a single lens or any number of lenses that guide the light beams into the desired positions. The sizes of components and distances between components are not shown to scale in FIG. 2. Some optical components may be positioned against other optical components so that there is no gap between the components. Auxiliary optical components such as polarizers, relay lenses, skew ray plates, polarization rotation plates, and trim filters are not shown in FIG. 2. The three SLMs shown in FIG. 2 may be each assigned to a primary color so that one is red, one is green, and one is blue. First light source 2400 may output sub-bands red 1, green 1, and blue 1 whereas second light source 2416 may output sub-bands red 2, green 2, and blue 2. First DBS 2432 may reflect blue while passing green and red. Second DBS 2438 may reflect green while passing red. Third DBS 2492 may reflect sub-bands red 1, green 1, and blue 1 while passing sub-bands red 2, green 2, and blue 2. First light source 2400 and second light source 2416 may output polarized light.

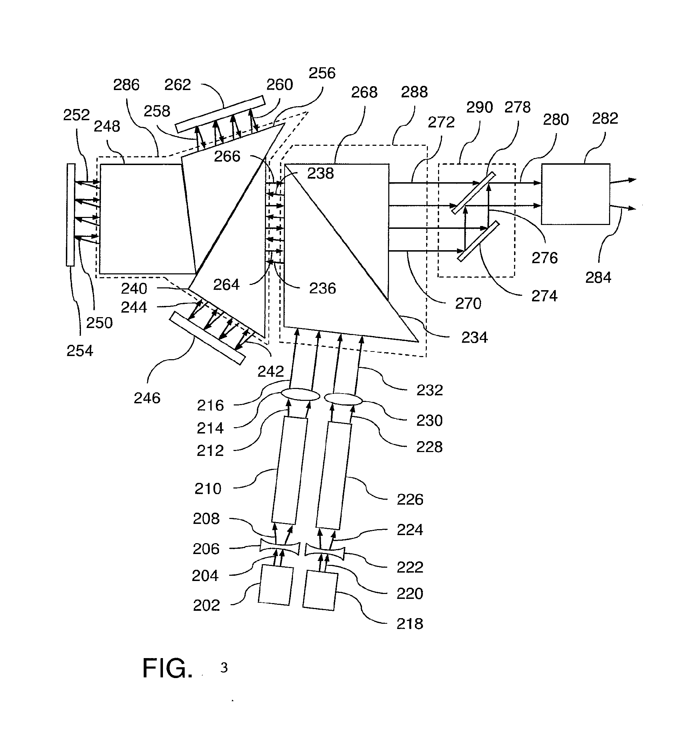

FIG. 3 shows a projector optical design with dual illumination using DMD SLMs. First light source 2502 produces first beam segment 2504 which is spread by first lens system 2506 to make second beam segment 2508. Second beam segment 2508 is homogenized by first mixing rod 2510 to produce third beam segment 2512. Third beam segment 2512 is collimated by second lens system 2514 to form fourth beam segment 2516. Fourth beam segment 2516 enters first subprism 2534 and reflects from the interface of first subprism 2534 and second subprism 2568 to form fifth beam segment 2538. Fifth beam segment 2538 partially reflects from the interface between third subprism 2540 and fourth subprism 2556 and then from the entrance face of third subprism 2540 to form sixth beam segment 2544. Fifth beam segment 2538 also partially transmits from the interface between third subprism 2540 and fourth subprism 2556 and partially transmits from the interface between fourth subprism 2556 and fifth subprism 2548 to form seventh beam segment 2552. Fifth beam segment 2538 also partially reflects from the interface between fourth subprism 2556 and fifth subprism 2548 and then reflects from the interface between fourth subprism 2556 and third subprism 2540 to form eighth beam segment 2560. Sixth beam segment 2544 is processed by first SLM 2546 which flips micromirrors for each pixel depending on the desired brightness of the pixel. For darker pixels, more light is directed back through the prism systems until the light is absorbed in a beam dump (not shown) and for brighter pixels, more light is directed to the output path which reflects from the entrance face of third subprism 2540 and then from the interface between third subprism 2540 and fourth subprism 2556 to form ninth beam segment 2566.

Seventh beam segment 2552 is processed by second SLM 2554 which flips micromirrors for each pixel depending on the desired brightness of the pixel. For darker pixels, more light is directed back through the prism systems until the light is absorbed in a beam dump (not shown) and for brighter pixels, more light is directed to the output path which passes through the interface between fifth subprism 2548 and fourth subprism 2556, then passes through the interface between fourth subprism 2556 and third subprism 2540 to join sixth beam segment 2544 in forming ninth beam segment 2566.

Eighth beam segment 2560 is processed by third SLM 2562 which flips micromirrors for each pixel depending on the desired brightness of the pixel. For darker pixels, more light is directed back through the prism systems until the light is absorbed in a beam dump (not shown) and for brighter pixels, more light is directed to the output path which reflects from the interface between fourth subprism 2556 and third subprism 2540, then reflects from the interface between fourth subprism 2556 and fifth subprism 2548, then passes through the interface between fourth subprism 2556 and third subprism 2540 to join sixth beam segment 2544 and seventh beam segment 2552 in forming ninth beam segment 2566.

Ninth beam segment 2566 passes through first subprism 2534 and second subprism 2568 to form tenth beam segment 2572. Tenth beam segment 2572 passes through first DBS 2578 to form eleventh beam segment 2580.

Second light source 2518 produces twelfth beam segment 2520 which is spread by third lens system 2522 to make thirteenth beam segment 2524. Thirteenth beam segment 2524 is homogenized by second mixing rod 2526 to produce fourteenth beam segment 2528. Fourteenth beam segment 2528 is collimated by fourth lens system 2530 to form fifteenth beam segment 2532. Fifteenth beam segment 2532 enters first subprism 2534 and reflects from the interface of first subprism 2534 and second subprism 2568 to form sixteenth beam segment 2536. Sixteenth beam segment 2536 partially reflects from the interface between third subprism 2540 and fourth subprism 2556 and then from the entrance face of third subprism 2540 to form seventeenth beam segment 2542. Sixteenth beam segment 2536 also partially transmits from the interface between third subprism 2540 and fourth subprism 2556 and partially transmits from the interface between fourth subprism 2556 and fifth subprism 2548 to form eighteenth beam segment 2550. Sixteenth beam segment 2536 also partially reflects from the interface between fourth subprism 2556 and fifth subprism 2548 and then reflects from the interface between fourth subprism 2556 and third subprism 2540 to form nineteenth beam segment 2558. Seventeenth beam segment 2542 is processed by first SLM 2546 which flips micromirrors for each pixel depending on the desired brightness of the pixel. For darker pixels, more light is directed back through the prism systems until the light is absorbed in a beam dump (not shown) and for brighter pixels, more light is directed to the output path which reflects from the entrance face of third subprism 2540 and then from the interface between third subprism 2540 and fourth subprism 2556 to form twentieth beam segment 2564.

Eighteenth beam segment 2550 is processed by second SLM 2554 which flips micromirrors for each pixel depending on the desired brightness of the pixel. For darker pixels, more light is directed back through the prism systems until the light is absorbed in a beam dump (not shown) and for brighter pixels, more light is directed to the output path which passes through the interface between fifth subprism 2548 and fourth subprism 2556, then passes through the interface between fourth subprism 2556 and third subprism 2540 to join seventeenth beam segment 2542 in forming twentieth beam segment 2564.

Nineteenth beam segment 2558 is processed by third SLM 2562 which flips micromirrors for each pixel depending on the desired brightness of the pixel. For darker pixels, more light is directed back through the prism systems until the light is absorbed in a beam dump (not shown) and for brighter pixels, more light is directed to the output path which reflects from the interface between fourth subprism 2556 and third subprism 2540, then reflects from the interface between fourth subprism 2556 and fifth subprism 2548, then passes through the interface between fourth subprism 2556 and third subprism 2540 to join seventeenth beam segment 2542 and eighteenth beam segment 2550 in forming twentieth beam segment 2564.

Twentieth beam segment 2564 passes through first subprism 2534 and second subprism 2568 to form twenty-first beam segment 2570. Twenty-first beam segment 2570 reflects from first mirror 2574 to form twenty-second beam segment 2576 and then reflects from first DBS 2578 to join tenth beam segment 2572 in forming eleventh beam segment 2580. Eleventh beam segment 2580 passes through fifth lens system 2582 to form twenty-third beam segment 2584 which passes outside of the projector to make a viewable image on a projection screen (not shown).

First subprism 2534 and second subprism 2568 form TIR prism 2588. Third subprism 2540, fourth subprism 2556, and fifth subprism 2548 form Philips prism 2586. Mirror 2574 and DBS 2578 form beam combiner 2590. First lens system 2506, second lens system 2514, third lens system 2522, fourth lens system 2530, and fifth lens system 2582 may be formed from a single lens or any number of lenses that guide the light beams into the desired positions. The sizes of components and distances between components are not shown to scale in FIG. 3. Some optical components may be positioned against other optical components so that there is no gap between the components. Auxiliary optical components such as polarizers, relay lenses, skew ray plates, polarization rotation plates, and trim filters are not shown in FIG. 3. The three SLMs shown in FIG. 3 may be each assigned to a primary color so that one is red, one is green, and one is blue. First light source 2502 may output sub-bands red 1, green 1, and blue 1 whereas second light source 2518 may output sub-bands red 2, green 2, and blue 2. The interface between third subprism 2540 and fourth subprism 2556 may reflect blue while passing green and red. The interface between fourth subprism 2556 and fifth subprism 2548 may transmit green while reflecting red. First DBS 2578 may transmit sub-bands red 1, green 1, and blue 1 while reflecting sub-bands red 2, green 2, and blue 2.

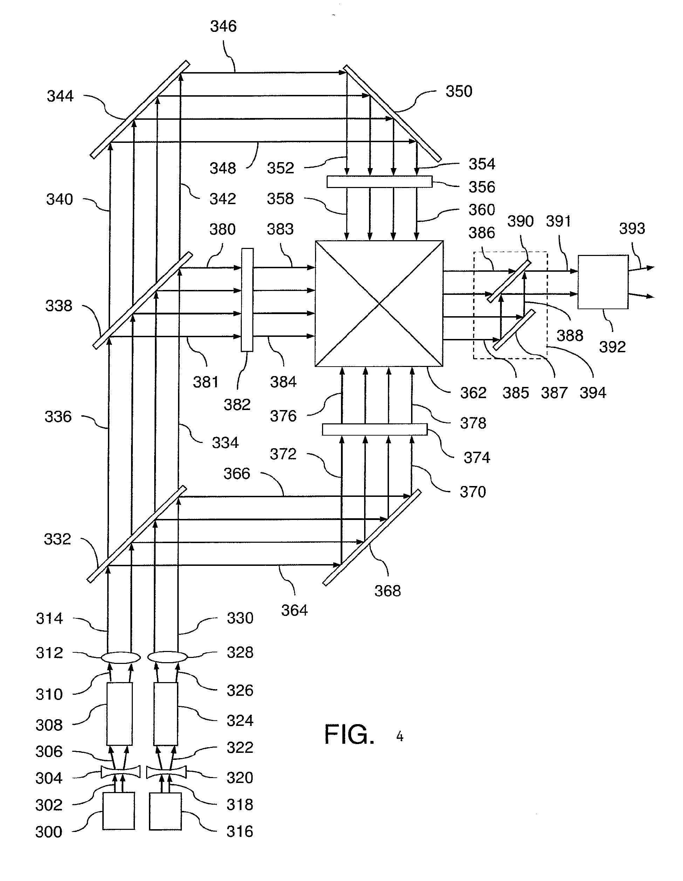

FIG. 4 shows a projector optical design with dual illumination using transmissive LCD SLMs. First light source 2600 produces first beam segment 2602 which is spread by first lens system 2604 to make second beam segment 2606. Second beam segment 2606 is homogenized by first mixing rod 2608 to produce third beam segment 2610. Third beam segment 2610 is collimated by second lens system 2612 to form fourth beam segment 2614. Fourth beam segment 2614 partially reflects from first DBS 2632 to form fifth beam segment 2664 and partially transmits to form sixth beam segment 2636. Fifth beam segment 2664 reflects from first mirror 2668 to form seventh beam segment 2672. Seventh beam segment 2672 is processed by first SLM 2674 which rotates the polarization of each pixel depending on the desired brightness of the pixel. On a pixel-by-pixel basis, depending on the amount of polarization rotation, the light is transmitted or absorbed to a varying degree by a polarizer (not shown) to form eighth beam segment 2676.

Sixth beam segment 2636 partially reflects from second DBS 2638 to form ninth beam segment 2681 and partially transmits to form tenth beam segment 2640. Ninth beam segment 2681 is processed by second SLM 2682 which rotates the polarization of each pixel depending on the desired brightness of the pixel. On a pixel-by-pixel basis, depending on the amount of polarization rotation, the light is transmitted or absorbed to a varying degree by a polarizer (not shown) to form eleventh beam segment 2684.

Tenth beam segment 2640 reflects from second mirror 2644 to form twelfth beam segment 2648. Twelfth beam segment 2648 reflects from third mirror 2650 to form thirteenth beam segment 2654. Thirteenth beam segment 2654 is processed by third SLM 2656 which rotates the polarization of each pixel depending on the desired brightness of the pixel. On a pixel-by-pixel basis, depending on the amount of polarization rotation, the light is transmitted or absorbed to a varying degree by a polarizer (not shown) to form fourteenth beam segment 2660.

First beam combiner 2662 combines eighth beam segment 2676, eleventh beam segment 2684, and fourteenth beam segment 2660 to form fifteenth beam segment 2685. Fifteenth beam segment 2685 reflects from fourth mirror 2687 to form sixteenth beam segment 2688. Sixteenth beam segment 2688 reflects from third DBS 2690 to form seventeenth beam segment 2691.

Second light source 2616 produces eighteenth beam segment 2618 which is spread by third lens system 2620 to make nineteenth beam segment 2622. Nineteenth beam segment 2622 is homogenized by second mixing rod 2624 to produce twentieth beam segment 2626. Twentieth beam segment 2626 is collimated by fourth lens system 2628 to form twenty-first beam segment 2630. Twenty-first beam segment 2630 partially reflects from first DBS 2632 to form twenty-second beam segment 2666 and partially transmits to form twenty-third beam segment 2634. Twenty-second beam segment 2666 reflects from first mirror 2668 to form twenty-fourth beam segment 2670. Twenty-fourth beam segment 2670 is processed by first SLM 2674 which rotates the polarization of each pixel depending on the desired brightness of the pixel. On a pixel-by-pixel basis, depending on the amount of polarization rotation, the light is transmitted or absorbed to a varying degree by a polarizer (not shown) to form twenty-fifth beam segment 2678.

Twenty-third beam segment 2634 partially reflects from second DBS 2638 to form twenty-sixth beam segment 2680 and partially transmits to form twenty-seventh beam segment 2642. Twenty-sixth beam segment 2680 is processed by second SLM 2682 which rotates the polarization of each pixel depending on the desired brightness of the pixel. On a pixel-by-pixel basis, depending on the amount of polarization rotation, the light is transmitted or absorbed to a varying degree by a polarizer (not shown) to form twenty-eighth beam segment 2683.

Twenty-seventh beam segment 2642 reflects from second mirror 2644 to form twenty-ninth beam segment 2646. Twenty-ninth beam segment 2646 reflects from third mirror 2650 to form thirtieth beam segment 2652. Thirtieth beam segment 2652 is processed by third SLM 2656 which rotates the polarization of each pixel depending on the desired brightness of the pixel. On a pixel-by-pixel basis, depending on the amount of polarization rotation, the light is transmitted or absorbed to a varying degree by a polarizer (not shown) to form thirty-first beam segment 2658.

First beam combiner 2662 combines twenty-fifth beam segment 2678, twenty-eighth beam segment 2683, and thirty-first beam segment 2658 to form thirty-second beam segment 2686. Thirty-second beam segment 2686 passes through third DBS 2690 to combine with sixteenth beam segment 2688 in forming seventeenth beam segment 2691. Seventeenth beam segment 2691 passes through fifth lens system 2692 to form thirty-third beam segment 2693 which passes outside of the projector to make a viewable image on a projection screen (not shown).

First beam combiner 2662 may be an X-prism. Second mirror 2687 and third DBS 2690 form second beam combiner 2694. First lens system 2604, second lens system 2612, third lens system 2620, fourth lens system 2628, and fifth lens system 2692 may be formed from a single lens or any number of lenses that guide the light beams into the desired positions. The sizes of components and distances between components are not shown to scale in FIG. 4. Some optical components may be positioned against other optical components so that there is no gap between the components. Auxiliary optical components such as polarizers, relay lenses, skew ray plates, polarization rotation plates, and trim filters are not shown in FIG. 4. The three SLMs shown in FIG. 4 may be each assigned to a primary color so that one is red, one is green, and one is blue. First light source 2600 may output sub-bands red 1, green 1, and blue 1 whereas second light source 2616 may output sub-bands red 2, green 2, and blue 2. First DBS 2632 may reflect blue while passing green and red. Second DBS 2638 may reflect green while passing red. Third DBS 2690 may reflect sub-bands red 1, green 1, and blue 1 while passing sub-bands red 2, green 2, and blue 2. First light source 2600 and second light source 2616 may output polarized light.

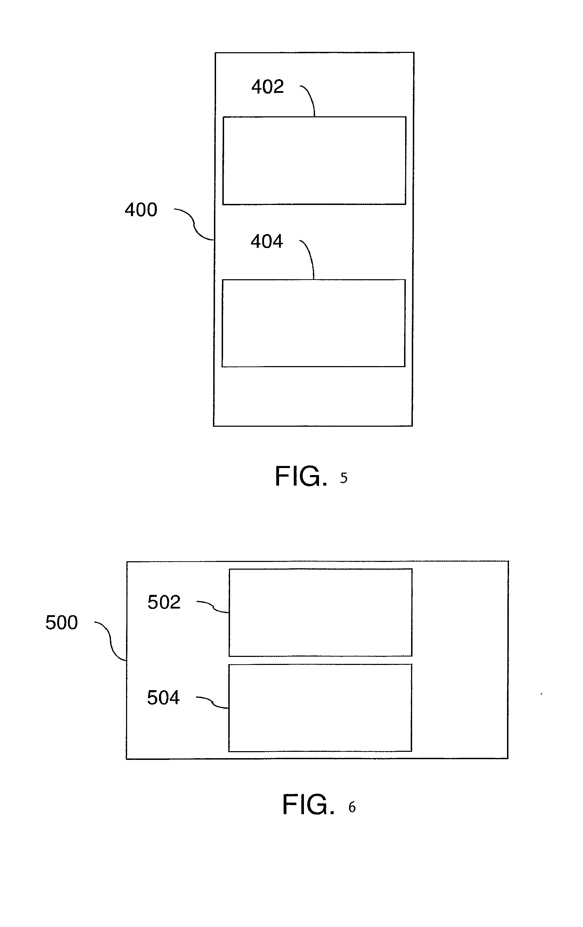

FIG. 5 shows a portrait-oriented SLM with two images located one above the other. First image 2702 is formed in one part of SLM 2700 and second image 2704 is formed in another, distinct part of SLM 2700. First image 2702 and second image 2704 are located such that most of the un-used pixels are above and below each image. In the case of stereoscopic systems, first image 2702 may be the left eye image and second image 2704 may be the right eye image.

FIG. 6 shows a landscape-oriented SLM with two images located one above the other. First image 2802 is formed in one part of SLM 2800 and second image 2804 is formed in another, distinct part of SLM 2800. First image 2802 and second image 2804 are located such that most of the un-used pixels are on the left and right of each image. In the case of stereoscopic systems, first image 2802 may be the left eye image and second image 2804 may be the right eye image.

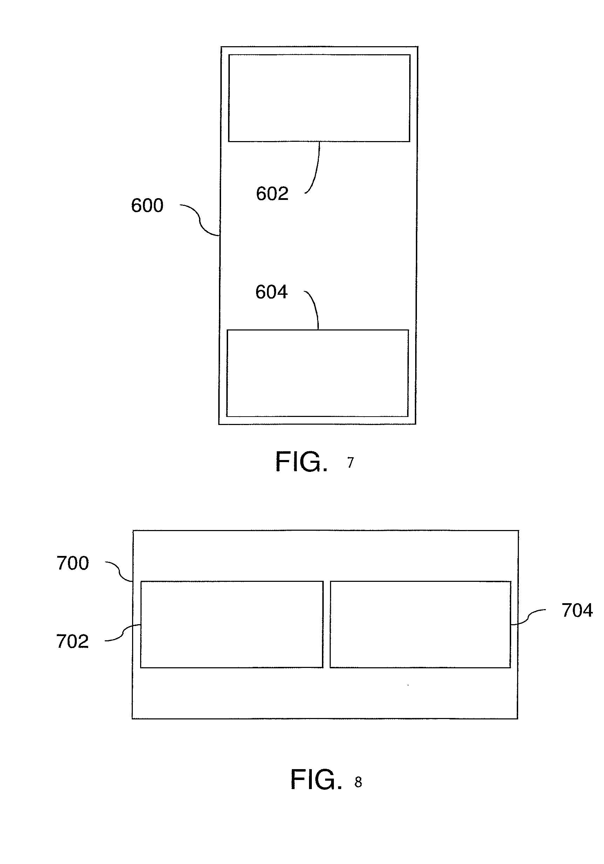

FIG. 7 shows a portrait-oriented SLM with two images far apart and located one above the other. First image 2902 is formed in one part of SLM 2900 and second image 2904 is formed in another, distinct part of SLM 2900. First image 2902 and second image 2904 are located such that most of the un-used pixels are between the two images. In the case of stereoscopic systems, first image 2902 may be the left eye image and second image 2904 may be the right eye image. By placing first image 2902 far from second image 2904 an increased guard band is formed between the two images that may reduce the amount of cross-talk or light spillage between the two images.

FIG. 8 shows a landscape-oriented SLM with two images located on the left and right of each other so that they form a central band across the horizontal center of the SLM. First image 3002 is formed in one part of SLM 3000 and second image 3004 is formed in another, distinct part of SLM 3000. First image 3002 and second image 3004 are located such that most of the un-used pixels are formed into one band above the images and one band below the images. In the case of stereoscopic systems, first image 3002 may be the left eye image and second image 3004 may be the right eye image.

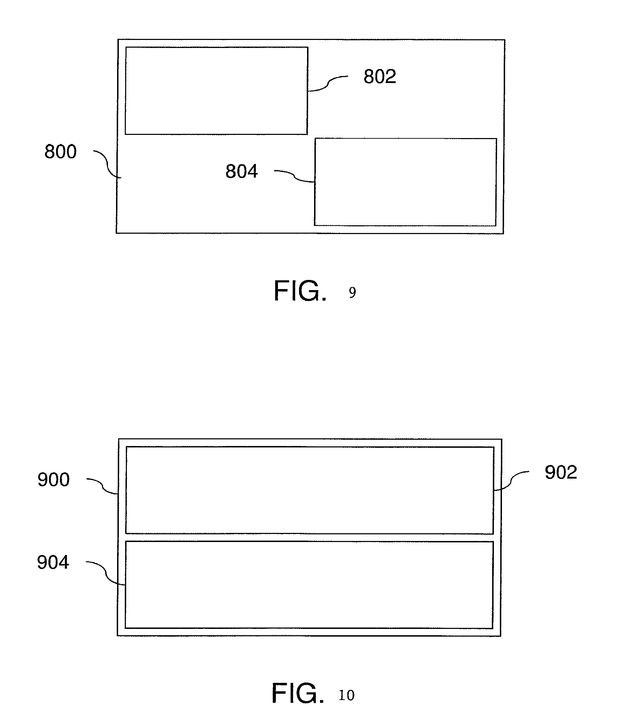

FIG. 9 shows a landscape-oriented SLM with two images located one diagonal to the other. First image 3102 is formed in one part of SLM 3100 and second image 3104 is formed in another, distinct part of SLM 3100. First image 3102 and second image 3104 are located such that most of the un-used pixels are above and below the two images in diagonally opposite corners. In the case of stereoscopic systems, first image 3102 may be the left eye image and second image 3104 may be the right eye image.

FIG. 10 shows a landscape-oriented SLM with an anamorphic pattern of pixels with one image located above the other. First image 3202 is formed in one part of SLM 3200 and second image 3204 is formed in another, distinct part of SLM 3200. First image 3202 and second image 3204 use substantially all of the pixels in SLM 3200. An anamorphic lens may be used to compress the horizontal axis (relative to the vertical axis) or expand the vertical axis (relative to the horizontal axis) such that the final viewable images are formed with the desired aspect ratio. In the case of stereoscopic systems, first image 3202 may be the left eye image and second image 3204 may be the right eye image.

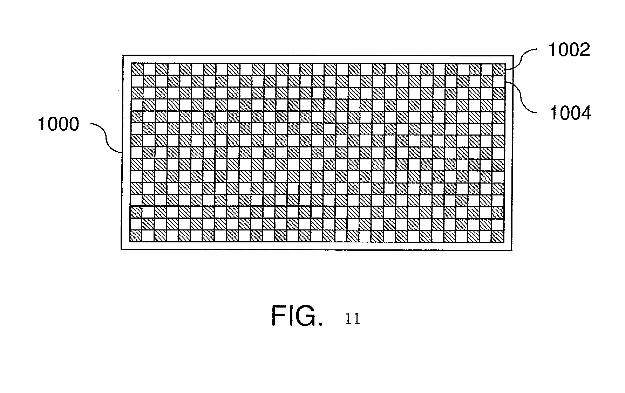

FIG. 11 shows a landscape-oriented SLM with a checkerboard pattern of pixels. Pixels of the first image on SLM 3300 are shown cross-hatched such as pixel 3302 and pixels of the second image on SLM 3300 are shown not cross-hatched such as pixel 3304. A 31 x 15 array of pixels is shown for clarity, but SLMs typically have many more pixels to form high resolution images. The checkerboard pattern uses substantially all the pixels of the SLM. In the case of stereoscopic systems, the first image may be the left eye image and second image may be the right eye image.

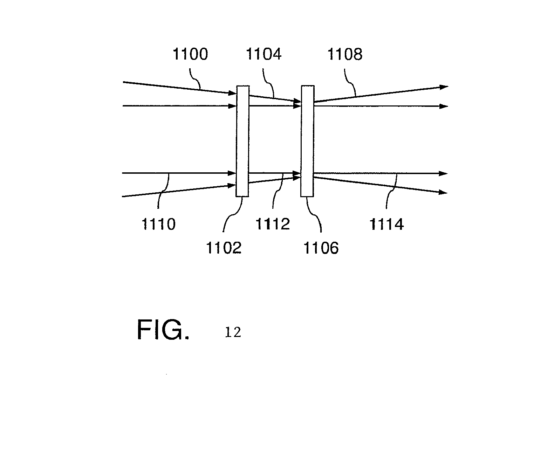

FIG. 12 shows low etendue illumination of an SLM and an optical component compared to high etendue illumination of the same SLM and optical component. First beam segment 3400 passes through optical component 3402 to form second beam segment 3404. Second beam segment 3404 passes through SLM 3406 to form third beam segment 3408. Alternatively, fourth beam segment 3410 passes through optical component 3402 to form fifth beam segment 3412. Fifth beam segment 3412 passes through SLM 3406 to form sixth beam segment 3414. First beam segment 3400, second beam segment 3404, and third beam segment 3408 have high etendue. Fourth beam segment 3410, fifth beam segment 3412, and sixth beam segment 3414 have low etendue. First beam segment 3400, second beam segment 3404, and third beam segment 3408 can be seen to have higher angles of incidence for rays near the edges of the beam segments. Fourth beam segment 3410, fifth beam segment 3412, and sixth beam segment 3414 can be seen to have lower angles of incidence for rays near the edges of the beam segments. Optical component 3402 may be any component that processes light such as a polarizer, skew ray plate, polarization rotation plate, interference filter, beamsplitter, mirror, or lens assembly. Skew ray plates are used to compensate the polarization state of rays at high angle of incidence. Polarization rotation plates make a controlled change in polarization such as changing linear polarization to circular polarization. SLM 3406 may be any sort of SLM such as DMD, LCD, or LCOS. Optical component 3402 and SLM 3406 are shown operating in transmission, but may alternatively operate in reflection. Optical component 3402 is shown to in the light path before SLM 3406, but alternatively, optical component 3402 may be after SLM 3406. The included angles of beam segments shown in FIG. 12 are for illustrative purposes only. The actual beam angles may be larger or smaller depending on the design of the actual optical system.

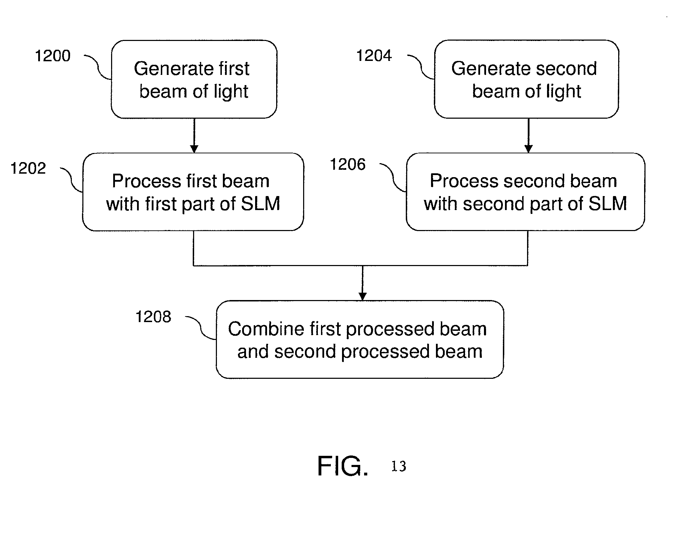

FIG. 13 shows a flow chart of a method of dual illumination. In this method, an SLM is illuminated by two light sources. In step 3500, a first beam of light is generated. In step 3502, the first beam of light is processed by the first part of an SLM. In step 3504, a second beam of light generated. In step 3506, the second beam of light is processed by the second part of the same SLM. In optional step 3508, the first beam of light after processing is combined with the second beam of light after processing.

When considering a light source, etendue is an optical property that characterizes how spread out the light beam is in both area and angle. In simple terms, the approximate etendue of a light source may be computed by multiplying the emitting area of the source by the solid angle that the light beam subtends. Lasers have low etendue whereas arc lamps, filament lamps, and LEDs have high etendue. If the light source has sufficiently low etendue, it is possible to focus light through a subsequent optical system with high efficiency. Laser light sources enable the independent illumination of more than one part of an SLM with high brightness. As an example, the beam from a semiconductor laser may have a cross-sectional area of 1 mm² and a beam divergence of 10 milliradians which makes an etendue of approximately 0.01 mm² sr. Most lasers have etendues less than 0.1 mm² sr, which allows effective illumination of multiple parts of an SLM. An example of a high etendue light source is an arc lamp which may have an emitting area of 3 mm² and a beam divergence of 12.6 radians which makes an etendue of approximately 38 mm² sr.

When considering an optical system which accepts light from a light source, etendue is the optical property that characterizes how much light the optical system can accept in both aperture area and angle. In simple terms, the approximate etendue of an optical system may be computed by multiplying the area of the entrance pupil by the solid angle of the light path as seen from the entrance pupil. For an optical system of a fixed etendue such as a projector SLM, associated lens systems, and auxiliary optical components, the etendue of the light source should be lower than or equal to the etendue of the optical system in order to efficiently illuminate the optical system without vignetting. Additional advantages may be gained by using an even lower source etendue. Low source etendue means that the angle of incidence is smaller, especially for rays that are near the edge of the beam. A low angle of incidence means that certain optical components may be simplified or may operate more effectively. For example, polarization uniformity may be improved in LCD and LCOS SLMs, skew ray plates may not be necessary, PBSs and polarization filters may have higher extinction ratios, multilayer interference filters may have less angle shift, and lens assemblies may be less subject to optical aberrations.

Prisms and beamsplitters are used in projectors and other optical systems to control the path of light beams. DBSs split or combine wavelength bands of light that form various colors and are usually constructed from interference coatings on flat substrates or prism surfaces. PBSs split or combine different polarizations of light and may be constructed from interference coatings, prisms, or by other techniques such as wire grids. Philips prisms consist of three subprisms with DBSs on two of the internal faces. TIR prisms have an air gap inside that makes total internal reflection when the incidence angle of the beam is greater than the critical angle. X-prisms consist of 4 subprisms assembled into a cube such that the internal surfaces have DBSs along both diagonal faces. Depending on their roles in the light path, prisms and beamsplitters may act as beam separators, beam combiners, or both at the same time.

SLMs may be one, two, or three-dimensional. In each case, an SLM processes an incoming beam of light to produce an outgoing beam of light which has pixels formed in a two-dimensional array. A one-dimensional SLM has a single pixel which is scanned in two directions to form a two-dimensional image. A one-dimensional SLM has pixels arranged in a one-dimensional line segment which is scanned in one direction to form a two-dimensional image. A two-dimensional SLM has pixels arranged in a two-dimensional shape such as a rectangle.

A mixing rod is used to make a light beam more spatially uniform and to form the beam into a specific cross-section, such as rectangular, so that the beams can better match the shape of an SLM. A mixing rod may be constructed from a solid rectangular parallelepiped where total internal reflection guides the rays of light inside to make multiple bounces within the mixing rod. In the case of dual illumination, there are two mixing rods, and a thin air gap may be used to keep the light within each rod while keeping the rods as close as possible. If the light sources are linearly polarized, orthogonal orientation of the mixing rods relative to the polarization state of the light will maintain the linear polarization state of the light sources. If circular polarization is desired at the output of the projectors, a quarter-wave rotation plate may be used to convert linear polarization to circular polarization. Alternatively, instead of mixing rods, other types of beam homogenizers may be used such as fly's eye lenses or diffusers.

Anamorphic lenses expand or compress one axis relative to the other, orthogonal axis. For example, an anamorphic lens may be used to compress the horizontal axis relative to the vertical axis, so that the 4:1 aspect ratios of the images in FIG. 32 become 2:1 aspect ratios. The use of an anamorphic lens allows substantially all of the pixels of SLM 3200 to be used for imaging so that there are few or no un-used pixels. A small number of un-used pixels may surround the images as guard bands if necessary to allow for alignment tolerances.

Projection lens systems such as fifth lens system 2495 in FIG. 2, fifth lens system 2582 in FIG. 3, and fifth lens system 2692 in FIG. 4 may consist of many individual lens elements that are combined into one lens system designed to project a large image onto a screen that is located many meters away from the projector. Functions such as image shifting, zooming, focusing, and other image control features may be built in the projection lens system. FIGS. 2 through 4 show a second beam combiner and one projection lens system, but alternatively, two projection lens systems may be used, one for each image. A second beam combiner is not necessary if two projection lens systems are used, but a beam separator may be required to increase the spacing between the two beams so that the beams can pass through the two projection lens systems.

Dual illumination of a projector is advantageous because light output may be increased relative to designs that use only one light source. This is particularly important for 3D projection systems that are often operated below desired brightness levels. Also, the light is efficiently used in a dual illumination system because the light is directed only to the pixels that form the images, and does not illuminate un-used pixels. In the configurations of FIGS. 10 and 11, a double benefit is that all the light is used and also all the pixels are used.

In one example of dual illumination, a wider gamut can be obtained by using more than three primary colors where the colors come from more than one light source. Red, green, and blue, may be generated by one light source whereas yellow (or yellow and cyan) may be generated by another light source. The two light sources may illuminate separate parts of an SLM or may overlap to illuminate the same part of the SLM.

In another example of dual illumination, an SLM may be illuminated with different wavelengths of the same primary color in order to reduce speckle. The checkerboard pattern of FIG. 11 may be illuminated such that the pixels that are cross-hatched process one wavelength of light, and the pixels that are not cross-hatched process another wavelength of light. The two wavelengths of light may be generated by two separate light sources, or may be generated by one light source with two output wavelengths. In the case where most of the speckle results from the green band, only the green band need be broken into two sub-bands to significantly reduce visible speckle.

Other optical systems include those with more than two light sources which may be utilized to illuminate two or more parts of each SLM, optical systems that are not imaging such as laser-beam spatial-shaping systems, optical systems that include non-visible light such as ultraviolet or infrared radiation, optical systems that use infrared radiation to simulate night-vision scenes, and optical systems that use inexpensive SLMs with resolution of 2K or less that are subdivided into more than one part.

Other implementations are also within the scope of the following claims.

## Claims

1. An optical system comprising:
a first light source;
a second light source; and
a spatial light modulator (SLM);
wherein the first light source has a first optical output which is processed by a first part of the SLM and the second light source has a second optical output which is processed by a second part of the SLM.

2. The system of claim 1 wherein the first light source has an etendue lower than 0.1 mm² sr.

3. The system of claim 2 wherein the first light source comprises a laser.

4. The system of claim 1, 2 or 3, wherein the first part of the SLM is used to form an image for a left eye of a viewer and the second part of the SLM is used to form an image for a right eye of the viewer.

5. The system of claim 4 further comprising a beam combiner which forms a combined image by combining the image for the left eye with the image for the right eye.

6. The system of claim 4 or 5 further comprising an anamorphic lens which expands or compresses the image for the left eye of the viewer such that a single axis is expanded or compressed relative to an orthogonal axis.

7. The system of claim 6 wherein the combined image has a checkerboard pattern of pixels, wherein the checkerboard pattern alternates pixels for the left eye and pixels for the right eye.

8. The system of claim 1 wherein the first optical output comprises a first wavelength band and the second optical output comprises a second wavelength band; the first wavelength band being distinct from the second wavelength band.

9. The system of claim 8 wherein the second optical output comprises a second wavelength band of red light, a second wavelength band of green light, and a second wavelength band of blue light; the second wavelength band of red light being distinct from the first wavelength band of red light; the second wavelength band of green light being distinct from the first wavelength band of green light; and second wavelength band of blue light being distinct from the first wavelength band of blue light.

10. The system of any preceding claim wherein the SLM comprises a liquid-crystal-on-silicon light valve.

11. The system of any preceding claim wherein the SLM comprises a digital-micromirror-device light valve.

12. A method of illumination comprising:
generating a first beam of light;
generating a second beam of light;
processing the first beam of light with a first part of a spatial light modulator (SLM) to form a third beam of light; and
processing the second beam of light with a second part of the SLM to form a fourth beam of light.

13. The method of claim 12 further comprising combining the third beam of light with the fourth beam of light.

14. The method of claim 12 or 13 wherein the first beam of light has an etendue lower than 0.1 mm² sr.

15. The method of claim 12, 13 or 14 wherein the first part of the SLM is used to form an image for a left eye of a viewer and the second part of the SLM is used to form an image for a right eye of the viewer.
